# NEW EUROPEAN PATENT SPECIFICATION

(11) **EP 1 545 248 B2**
(45) Date of publication and mention of the opposition decision: **21.08.2013**
(45) Mention of the grant of the patent: 11.11.2009
(21) Application number: 03769333.0
(22) Date of filing: 26.09.2003
(51) Int. Cl.: A23P 1/16, A23L 1/05, A23J 3/00, A23G 3/00, A23G 1/00, A21D 13/00, A23L 1/053, A23L 1/054, A23L 1/056, A23L 1/0534, A61K 8/00

(54) **INTERFACE STABILISATION OF A PRODUCT WITH 2 OR MORE PHASES WITH A PROTEIN-POLYSACCHARIDE COMPLEX**
GRENZFLÄCHENSTABILISIERUNG VON PRODUKTEN MIT ZWEI ODER MEHR PHASEN MIT EINEM POLYSACCHARID-PROTEIN KOMPLEX
STABILISATION DES INTERFACES D'UN PRODUIT PRESENTANT AU MOINS DEUX PHASES A L'AIDE D'UN COMPLEXE PROTEINE-POLYSACCHARIDE

(30) Priority: 27.09.2002 EP 02021653
(43) Date of publication of application: 29.06.2005
(73) Proprietor: Nestec S.A., 1800 Vevey (CH)
(72) Inventor: KOLODZIEJCZYK, Eric, CH-1800 Vevey (CH); SCHMITT, Christophe, CH-1092 Belmont S/Lausanne (CH)
(74) Representative: Rupp, Christian
(86) International application number: PCT/EP2003/010740
(87) International publication number: WO 2004/028281

(56) References cited:
- EP-A1- 0 163 787
- WO-A-00/23038
- CH-A- 675 370
- DE-A1- 3 907 676
- GB-A- 751 600
- GB-A- 1 440 181
- GB-A- 2 134 117
- GB-A- 2 179 043
- US-A- 3 407 076
- US-A- 5 342 643
- POOLE S: "The foam-enhancing properties of basic biopolymers." INTERNATIONAL JOURNAL OF FOOD SCIENCE & TECHNOLOGY 1989, vol. 24, no. 2, 1989, pages 121-137, XP008014428 UK cited in the application
- AHMED M ET AL: "Foaming of aqueous solutions of protein + propylene glycol alginate." FOOD HYDROCOLLOIDS 1991, vol. 4, no. 5, 1991, pages 395-402, XP008014429 UK cited in the application
- PATENT ABSTRACTS OF JAPAN vol. 0091, no. 30 (C-284), 5 June 1985 (1985-06-05) & JP 60 016573 A (RAION KK), 28 January 1985 (1985-01-28)
- GIRARD M ET AL: "Emulsifying properties of whey protein-carboxymethylcellulose complexes." JOURNAL OF FOOD SCIENCE, vol. 67, no. 1, 2002, pages 113-119, XP002267658
- EINHORN-STOLL U ET AL: "MODIFIED PECTINS IN WHEY PROTEIN EMULSIONS" DIE NAHRUNG, vol. 40, no. 2, 1996, pages 60-67, XP000604246 DE ISSN: 0027-769X
- GARTI N ET AL: "Portulaca oleracea gum and casein interactions and emulsion stability." FOOD HYDROCOLLOIDS, vol. 13, no. 2, 1999, pages 127-138, XP002267659
- DICKINSON E ET AL: "Influence of kappa -carrageenan on the properties of a protein-stabilized emulsion." FOOD HYDROCOLLOIDS, vol. 12, no. 4, 1998, pages 417-423, XP002267660
- DICKINSON E: "Stability and rheological implications of electrostatic milk protein-polysaccharide interactions." TRENDS IN FOOD SCIENCE & TECHNOLOGY, vol. 9, no. 10, 1998, page 347354, XP002267661
- C. SCHMITT ET AL.: 'Complex coacervation between ß-lactoglobulin and acacia gum in aqueous medium' FOOD HYDROLYSIS 13 1999, pages 483 - 496
- R., HART: 'Stable protein foams: a new technology with new uses' PREPARED FOODS June 1989, pages 71 - 72
- PRAKASH ET AL.: 'The effects of added proteins on the functionality of gum arabic in soft drink emulsion systems' FOOD HYDROCOLLOIDS vol. 4, no. 3, 1990, pages 177 - 184

## Description

The present invention concerns a two-phases or more product with enhanced stability.

A two-phases product, like a foamed product are very known on the market and appreciated by the consumer. An emulsion, like a mayonnaise, is also very spread on the market. For stabilizing the emulsion, an emulsifier is normally used, which is directly present in the bulk phase. The main drawback of this solution is the limitation of the diffusion of the emulsifier from the bulk to the interface resulting in a decrease in the final product stability. In the case of a foam, the control and design of texture is mainly achieved by adjusting the viscosity properties of the liquid bulk phase surrounding air bubbles (Walstra P. and De Roos A.L. (1993), Food Rev. Int., 9,503-525). To overcome the foam formation and foam stability problems, one generally combine surfactant molecules (phospholipids, fatty acids) together with tension active molecules (proteins). The former will initially decrease the interfacial area by adsorption at the interface, resulting in a high foam capacity. By contrast, the latter will form a viscoelastic layer around the bubbles, decreasing then the surface tension. This results in a higher stability of the foam. However, this combination has some drawbacks, since it requires the use of complex mixtures of surfactant and tension-active molecules. Moreover, it has been shown that both types of molecules are generally incompatible at the interface leading to interfacial phase separation and destabilisation (Mackie A.R. and al. (1999), J. Colloid Interf. Sc., 210, 157-166).

It is also possible to use protein-polysaccharide complexes to stabilize interfaces. This is the case for the US Patent No. 6'197'319, wherein a protein-polysaccharide complex is incorporated in a cosmetic composition, which is an emulsion. In this case, the complex is previously formed and then incorporated in the bulk. This is the same for the EP Patent No. 340'035 : a microfragmented ionic polysaccharide/protein complex dispersion is formed to be used as fat substitute in food products, such as ice cream, sald dressings, dips, spreads and sauces. The US Patent No. 3'944'680 concerns a process for the preparation of an aqueous oil emulsion of prolonged storage life. In this case, the complex protein/polysaccharide is formed in the bulk, and there is a problem of diffusion of the complex from the bulk to the interface as already mentioned in the preceding paragraph.

Hence, these protein-polysaccharide complexes have been shown to form upon electrostatic attraction in well defined conditions of pH, ionic strength, protein to polysaccharide ratio, total biopolymer concentration, temperature or pressure (Schmitt C. et al. (1998), Crit. Rev. Food Sci. Nutr., 38, 689-753). In addition, various studies have demonstrated that these complexes exhibited better functional properties such as gelation, emulsification and foaming than that of the biopolymers alone. However, it is also known that the formation of complexes through electrostatic attraction between protein and polysaccharide lead to the associative phase separation phenomena (Piculell L. and Lindman B. (1992), Adv. Colloid Interf. Sci., 41, 149-178; Doublier J.-L. et al. (2000), Curr. Opinion Colloid Interf. Sci., 5, 202-214) or complex coacervation (Bungenberg de Jong H.G. (1936), La coacervation complexe et son importance en biologie, E. Fauré-Fremiet Ed, vol 1, Paris: Hermann et Cie). During associative phase separation which is a time dependent mechanism, the initial electrostatic protein-polysaccharide complexes interact ones with the others because of charge neutralisation to increase the electrostatic entropy of the system by release of counter-ions in the medium (Tolstoguzov V.B. (1997), Protein-polysaccharide interactions, S. Damodaran and A. Paraf Eds, Food Proteins and their Applications, pp 171-198, New York: Marcel Dekker Inc). Coming closer to the thermodynamic equilibrium, the complexes become insoluble and form liquid droplets called coacervates. These coacervates finaly form a concentrated liquid phase at equilibrium with a very diluted phase containing mainly solvent (Mattisson K.W. et al. (1999), Macromol. Symp., 140, 53-76). The size of the successive entities formed ranged from tens of nanometers for the initial macromolecular complexes (Xia J. (1993) Macromolecules, 26, 6688-6690; Bowman W. (1997), Macromolecules, 30, 3262-3270) to hundreds of microns for the coacervates (Schmitt C. et al. (2001), Colloids and Surf. B: Biointerf., 20, 267-280). In terms of interfacial activity, it is well know that the coefficient of diffusion of the surface-active components is very important. Large molecular weight surface-active components (for example, protein-polysaccharide complexes) go very slowly at the interface to the contrary of low molecular weight surface-active components (sugar-esters, triglycerides). However, the former are much more effective for interfacial stabilisation (Dickinson E. and Galazka V.B. (1991), Food Hydrocolloids, 5, 281-296).

It has been demonstrated that protein/anionic polysaccharide or basic protein/acidic protein mixtures are able to improve significantly the foaming properties as compared to the protein taken alone (Ahmed & Dickinson, 1991, Food Hydrocolloids, pages 395-402; Poole, 1989, International Journal of Food Science and Technology, pages 121-137 and GB 2134117 and GB 2179043). In the latter documents cited , no improvement of the foam stability is clearly described after mixing of the protein with another protein or polysaccharide. Thus, these papers refer only to increased foamability, which did not foresee any improvement of stability. An important point that is not mentioned in these documents is the effect of the time on the surface properties of the formed complexes. Since complexation is mainly due to electrostatic interactions between the two compounds, a charge neutralisation of the complexes arises with time (whatever the initial mixing ratio). It follows that more and more complexes are able to interact one with the other (no repulsion between the complexes), leading to an increase of the size of the complexes and to their progressive insolubilisation. These two phenomena are very detrimental for the stabilisation of an interface since they reduce the capability of the complexes to remain in solution and to migrate at the interface. This is the main reason why the industrial use of electrostatic complexes is scarce. Our invention allows circumventing these critical points in the use of protein/polysaccharide complexes. Since we are creating the complexes concomitantly with the interface (gas/liquid), they remain soluble and are small enough to go at the interface (with the help of the energy input within the system). Once at the interface, these complexes rearrange to form coacervates that effectively form a stabilising film and that can be detected at the interface within finished food products by means of microscopic histochemical techniques.

The article in Food Hydrocolloids 13 (1999) , pages 127-138, mentions the possibility of adding casein (protein) and POG (new gum from Portulaca oleracea L., polysaccharide) in an emulsion. In this article, what is described is a multilayer adsorption phenomena, which is stated on page 135 of said article. We have not such a multilayer formation, but a formation of a complex of protein and polysaccharide at the interface.

According to the present invention, it is possible to stabilise efficiently interfaces using protein-polysaccharide electrostatic complexes formed at the same time than the interface they have to stabilise, because they have smaller size and a higher diffusion coefficient. In this case, the protein-polysaccharide complexes will be soluble and with sufficiently low molecular weight to be at the interface. Based on these observations, the objective of the present invention is, in the case of a at least two phases product, to control the surface properties between said phases.

The present invention concerns a product taken from the group consisting of a foam, a foamed emulsion, and a foamed dispersion, wherein the interface water-air, comprises a soluble complex formed concomitantly with the interface and instantaneously forming coacervates which form a stabilizing film at said interface by the mixture of at least a protein and at least a polysaccharide oppositely charged, said product being in a pH range within which the electrostatic interaction between both compounds oppositely charged occurs and wherein the total amount of protein and polysaccharide, is comprised between 0.01 and 5 % in weight.

The complex (or coacervate) in the product of the invention is formed instantaneously, directly during the preparation of said product and positioned directly at the interface water-air. The active compounds are in aqueous solutions or oil-in-water emulsions.

The purpose of the invention is to control the surface properties of the interfaces by using an ingredient mix of protein and polysaccharide. The mix significantly enhances, in the case of foaming, the foam capacity, that means more foam is obtained and the foam stability (smaller air bubbles, less drainage).

The mix efficiency remains in the formation of electrostatic complexes under well defined conditions of pH (when electrostatic interaction occurs), temperature (from 0°C to room temperature), with a ratio protein to polysaccharide or ratio of both proteins from 1:20 to 20:1 and total biopolymer concentration between 0.01 and 5 % in weight. Under biopolymer, we understand the addition of the weight concentrations of protein and polysaccharide.

By using the complex in liquid form, it is possible to enhance the foam formation since the initially formed complex acts as surfactant. After the foam is formed, the complex further interacts one with the other to form the so-called coacervates. These coacervates exhibit high viscoelastic properties and by the way rearrange at the interface to form a viscoelastic film that stabilise the foam.

A product containing protein-polysaccharide complex obtained through ionic interaction is used to produce different types of interfaces from liquid dispersion. In a first step, the molecular complex acts as surfactant, so that the interfacial area is decreased. In a second step, the complex rearrange at the interface in order to form coacervates that spread around the air bubbles, forming a viscoelastic film that stabilises the bubbles against destabilisation.

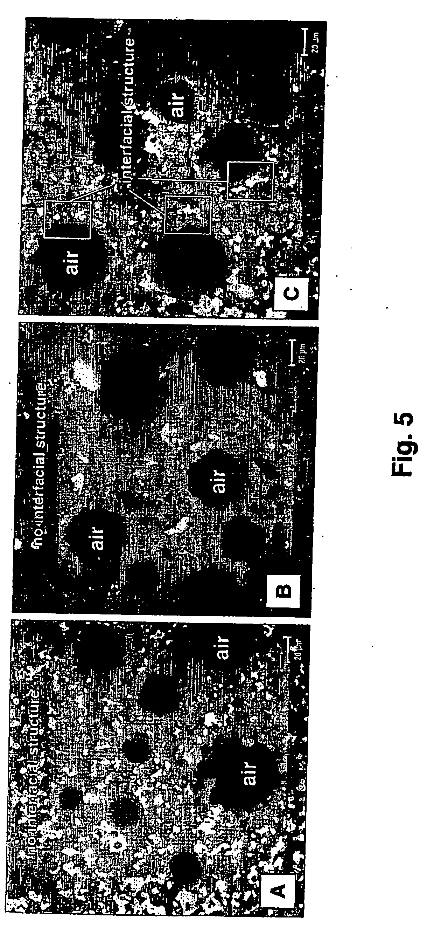

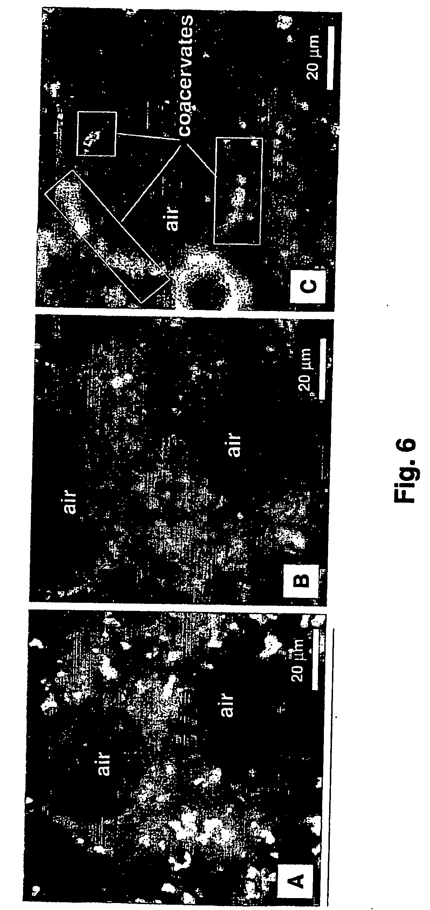

The instant formation of the protein-polysaccharide complex results in a characteristic structural signature combining both a typical structure and distribution of fats and a typical structure and composition of viscoelastic films at the water/air interface. This can be demonstrated with various microscopy techniques, in particular, by showing specifically the location of the protein and the polysaccharide components within the interfaces: see below figures 5 and 6.

The active compounds are in aqueous form, and the interface concerned is an air-water interface. In the case of a foamed emulsion, both air-water and oil-water interfaces are concerned. In the case of a dispersed emulsion, both air-solid and oil-water interfaces are concerned. In the case of a foamed dispersion the water-air interface is concerned.

The protein of the product is taken from the group consisting of a protein from milk, soy, egg, meat, fish and plant. Under plant, we understand mainly cereals but also leguminosea. Most preferably, the protein is β-lactoglobulin, gelatin, α-lactalbumin, bovin serum albumin, soy globulin, soy protein, wheat protein, whey protein, soy protein, egg white protein.

The polysaccharide is taken from the group consisting of charged natural or synthetic polysaccharides. Most preferably, the polysaccharide is acacia gum, carboxy-methyl-cellulose, chitosan, xanthan, alginate, propyleneglycol alginate, carrageenans, low or high methoxylated pectins, arabinogalactans, rye arabinoxylans (Ax rye), wheat arabinoxylans (Ax wheat).

The product of the invention can be used either per se or in mixture with another product. In the case of a use in the food area, the final product is ice cream, a culinary product, chocolate, dessert, a dairy product , wafers, sponge cakes or a petfood product. It is also possible to use it in coffee creamer or dairy coffee creamer. In this case, the product of the invention is present in an amount of 10 to 100 % of the final product in weight.

In the case of a use in the cosmetic or perfume area, the product is used in an amount comprised between 10 and 100 % of the final product in weight.

The invention concerns further the processes for the preparation of the product of the invention. There are different possible products and the following description will consider all these possible ways.

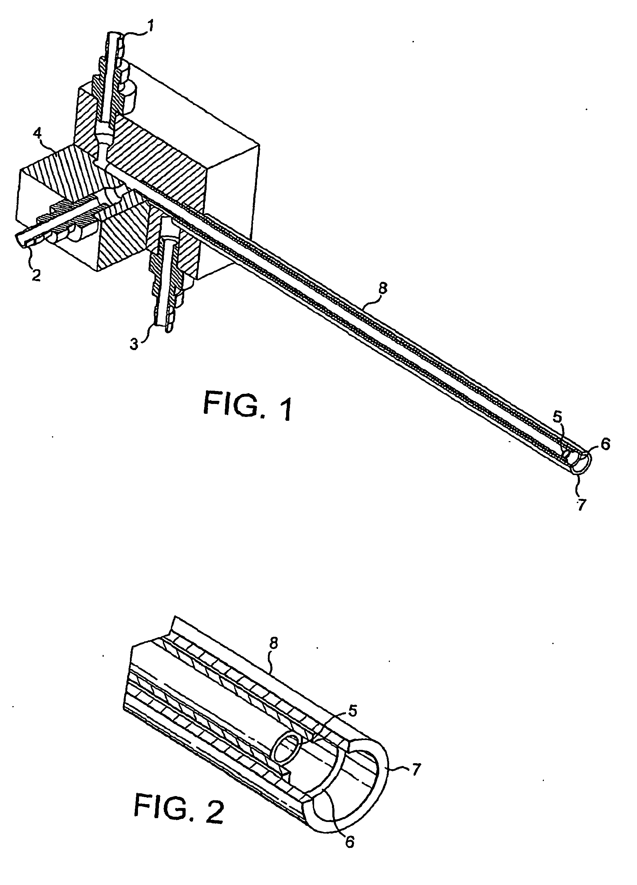

In the case of a preparation of a foam product, the way of preparation is following :
a solution or a bulk mass of the at least one protein and a solution or a bulk mass of the at least one polysaccharide is injected with the air in a bulk mass or directly in the air in the case of two bulk masses using the multi-tube reactor described in Fig 1. The bulk mass can be a dairy product, containing sugar or not, containing a living organism or not. In this case, the polysaccharide is preferably acacia gum and the protein is β-lactoglobulin. The product has a final pH of around 4.2. The concentration of the protein and polysaccharide is around 0.01 to 5 % in weight. The ratio of protein to polysaccharide is around 20:1 to 1:20. The preparation is carried out at a temperature of around 4 to 50°C. In this case, the product obtained is the final product. The quantity of air injected is not critical and can vary between 10 and 700 % of the product.

According to a second embodiment of the preparation of a foam product, the way of preparation is following :a solution of at least one protein and a solution of at least one polysaccharide are mixed together in the presence of air. This is the basic concept of the invention : the mixing of both active compounds creates per se the formation of the foam. If necessary, it is also possible to carry out a subsequent whipping. According to this way of proceeding, the product obtained is not the final product. It is then mixed with a preparation for ice cream, or with a preparation for a wafer.

It is also possible, to have a foamed emulsion. In this case, a solution of at least one protein and a solution of at least one polysaccharide are mixed together in the presence of air. This foamed product is then incorporated in an emulsion to obtain for example a foamed mayonnaise. In this case, the protein is β-lactoglobulin, the polysaccharide is acacia gum and the lipid phase is sunflower oil or olive oil. The overrun of whipping is around 10 to 700 %.

According to a further embodiment of the invention, it is possible to prepare directly a foamed emulsion. In this case, the way to proceed is following :
a bulk product is prepared using a first part of an emulsion which is stabilised with at least one protein, a second part of an emulsion is stabilised with at least one polysaccharide, both emulsions are mixed together and diluted in the bulk product, then a new dispersion of the protein with a new dispersion of the polysaccharide are injected with air (using the foaming device described on Fig 1) in the bulk product to form the foamed bulk product.

In this case, the bulk product is preferably a mix for ice cream. The lipid used for the emulsion is preferably sunflower oil, palm oil, palm kernel oil or milk fat. The protein used is preferably β-lactoglobulin and the polysaccharide is acacia gum. The amount of both protein and polysaccharide is around 0.01 to 5 % in weight. The pH is around 4.2. The final product is then either frozen by a static freezing or by a dynamic freezing.

According to a last embodiment of the invention, a foamed dispersion is prepared. The way of producing is following
a solution of the at least one protein and a solution of the at least one polysaccharide is injected with the air in a bulk of dispersed particles.

A typical example of a foamed dispersion is the preparation of a sorbet. In this case, a solution of the at least one protein and a solution of the at least one polysaccharide is injected with the air in a bulk mass. In this case , the bulk mass does not contain fat, but more a fruit, or juice or fruit puree.

The bulk dispersed particles can be a yoghurt preparation, or another acidic gel with bacteria or with a gel obtained by chemical acidification or heat treatment of gelling polysaccharides or proteins.

It is also possible to proceed according to a second way : a solution of at least one protein and a solution of at least one polysaccharide are mixed together in the presence of air. The bulk of dispersed particles is then mixed with this foam to obtain the foamed dispersion.

For this last embodiment, it is possible to consider the preparation of wafers or caramel.

The invention concerns further the device for carrying out the process of the invention. This device comprises on a frame :
- a first pipe for the arrival of an emulsion or dispersion with a protein
- a second pipe for the arrival of the gas
- a third pipe for the arrival of an emulsion or dispersion with a polysaccharide,
these three pipes arriving on a main channel, being disposed perpendicular and staggered along said main channel , the first pipe forming the central pipe on the main channel, the second pipe forming the intermediate pipe on the main channel and the third pipe forming the external pipe on the main channel and wherein the outlet on the main channel of the central and the intermediate pipe are staggered.

A further object of the present invention is to have a product, wherein the stability of its structure during storage or heat shock is kept practically unchanged. Under storage in the present description, we understand a storage of one to twelve months. Considering the case of ice cream, by practically unchanged, we understand that the volume of air bubbles does not decrease much by taking out and putting again said ice cream several time in the freezer. The consumer has therefore a product, wherein the quality remains practically unchanged during its whole storage. This is the same for the other products considered in the present patent.

The description is now made in relation with the figures, wherein
Figure 1 shows a perspective view of the device (triple needle) according to the invention and
Figure 2 is an enlarged view of the outlet of the device.
Figure 3 is a microscopical view of the air bubbles in the ice-cream according to example 2 further to their dispersion in the medium used for the quantitative analysis,
Figure 4 is a graph of the cumulative volume distribution of air bubbles analysed in example 2,
Figure 5 show confocal scanning laser microscopy of products of example 2,
Figure 6 show confocal scanning laser microscopy of products of example 2, at a higher resolution and
Figure 7 shows the interface of an air bubble where coacervates were formed instantaneously at the interface in a model system of an air bubble in a biopolymer mixture solution.

The injection system is on a frame (4). In this frame, there are 3 pipes. The pipe (1) is used for the arrival of the first dispersion with the protein, the pipe (2) is used for the entrance of the gas, that is the air and the pipe (3) is used for the arrival of the second dispersion with the polysaccharide. The 3 pipes of the device arrive on a main channel (8) : they are disposed perpendicularly and staggered along said main channel (8). This device is used for the different examples in the specification and hereunder.

The important feature is that at the point of the mixing of the gas with the first and the second dispersion the outlet of pipes (5) and (6) are staggered as shown on figure 2. This allows a reaction time between the components of the mixture.

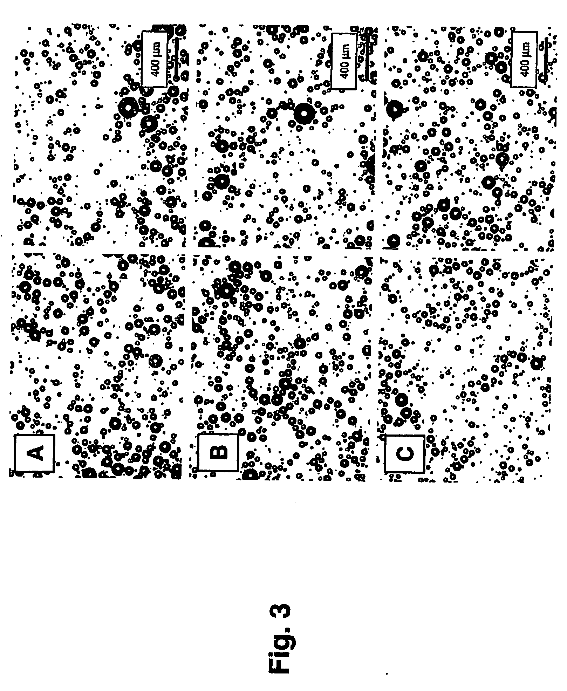

Figure 3 is the air bubbles dispersion found after whipping to 100% overrun at +4°C the ice-cream recipe described in example 2 using a Mondomix apparatus. Picture A is a classical mixture (10% non-fat milk solids) that did not contained the β-lactoglobulin and the acacia gum. The shearing speed was set to 800 rpm. Picture B is the same recipe but part of the non-fat milk solids was replaced by 2.5% whey protein isolate and 1.25% acacia gum. Here also shearing speed was 800 rpm. Picture C was taken after aeration of the recipes described in example 2 using the injection device (Fig. 1) coupled with the whipping device (Mondomix). The air bubble size is the same than in A and B, but the shearing rate is only 400 rpm. These results clearly demonstrated the highest foamability of the ice cream recipe containing protein-polysaccharide complexes intantaneously produced at the interface.

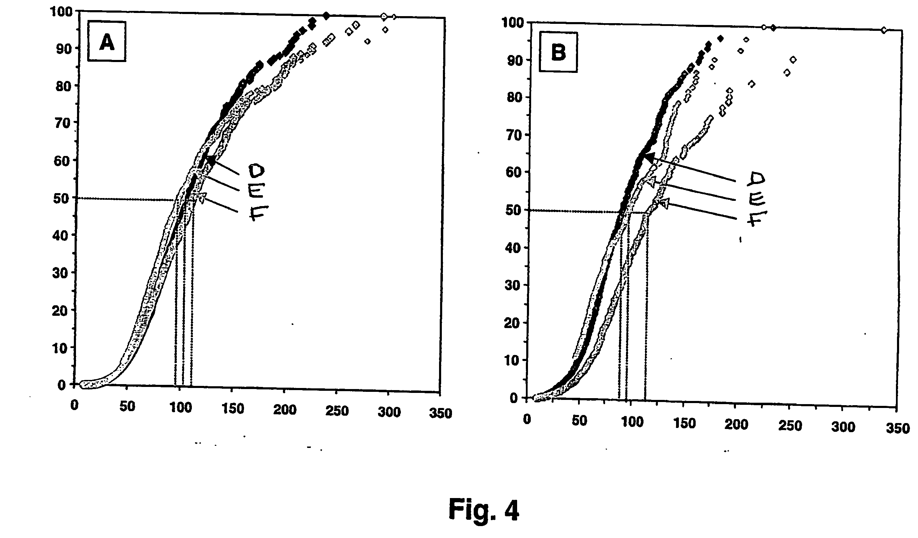

The air bubble analysis was carried out according to the procedure briefly described below :
An aliquot of the product is weighed and dispersed in a medium of high viscosity. The composition of the dispersing medium is designed to stabilize the air bubbles. The dispersion is submitted to an automated quantitative image analysis. The same procedure is taken for figure 4.

Figure 4 represents the cumulated volume size distributions of the recipes corresponding to the previous control (D), BLG/AG control (E) and triple needle BLG/AG (F) recipes described before (A) and after (B) heat shock treatement. The graphs represent the cumulative distribution of air bubbles in percent of the total volume of air analysed (x axis gives the air bubble diameter in mm and y axis gives in % the cumulated air volume analysed). Samples were equilibrated for one week at -40°C before bubbles were measured. Heat-shock was achieved with 7 days cycle of temperature variation between -20 and -8°C. Each increase or decrease of temperature lasted 12 hours. Bubble size distribution was achieved by image analysis of the bubbles taken from 4 repetitions of the same sample after dispersion in a viscous glycerol containing medium. It is clear that the initial size distributions are very similar, which corroborates the previous microscopical observations on the bubbles (the sample produced with our invention required 2 times less energy input). After heat shock, both the control and BLG/AG control showed a shift of the size distribution to smaller air bubbles, which is in fact due to a loss of the largest air bubbles. Difference in air bubble content is the area between the initial and the heat-shock curves. Very interestingly, the curve corresponding to our invention did not move at all. This reveals the very high heat-shock stability of the sample.

Figure 5 shows the confocal scanning laser microscopy pictures of the three ice-cream products after 7 days equilibration at -40°C. The protein was coloured by the rhodamine 6G reagent that is known to specifically label protein through hydrophobic interactions. The confocal microscopy is carried out as follows : an aliquot of the product is put into a 2 mm deep covet and covered with 100 µl of a 10⁻⁶ M aqueous solution of Rhodamine 6G. After melting, the melting is covered with a glass cover slide and examined by confocal microscopy. On the figure, the views are following : (A) control recipe; (B) BLG/AG control recipe; (C) recipe according to our invention. From the observation of the pictures, the structuration of the air bubble interface with proteins using our invention is clear as compared to the two controls. In these two latter products, proteins are somewhat distributed randomly within the matrix.

Figure 6 represents the thin section micrographs of the three ice-cream products after Rhodamine 6G coloration according to the same procedure as for the preceding figure. On this figure, the views are following : (A) control recipe; (B) BLG/AG control recipe; (C) recipe according to hour invention. The presence of specific structures around the air bubbles has to be noted. To our opinion, these are coacervates made from the interfacial interaction between the primary formed BLG/AG complexes.

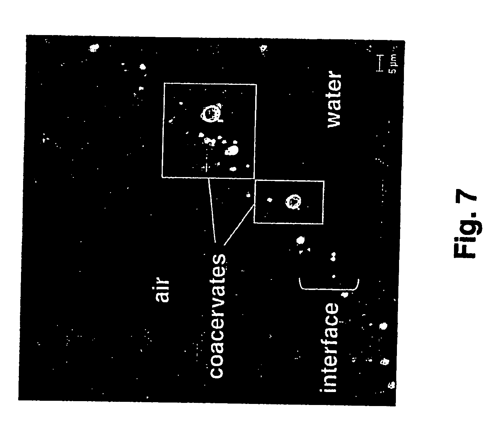

Figure 7 shows the confocal scanning laser micrograph of the interface of an air bubble made in a just made mixture of β-lactoglobulin 2.5% and acacia gum 1.25% at pH 4.2 in water. β-lactoglobulin was covalently labeled with fluoresceine isothiocyanate. The coacervates present at the interface are comparable to those observed in the final ice cream product obtained according to our invention (Fig. 6C).

### Examples

The following examples illustrate some applications of the present invention.

### Example 2

An ice cream mix is prepared from 9% palm-palm kernel oil, 5% non-fat milk solids, 5% whey protein isolate, 17% sucrose, 0.4% of a stabiliser blend containing hydrocolloids such as locust bean gum, guar, carrageenans, carboxymethylcellulose, water and emulsifiers. The pH of this first mix is ajusted to pH 4.2 by addition of citric acid. A second mix is prepared from 9% palm kernel oil, 7.5% non-fat milk solids, 2.5% acacia gum powder, 14% sucrose, 0.4% of a stabiliser blend containing hydrocolloids such as locust bean gum, guar, carrageenans, carboxymethylcellulose, water and emulsifiers. The pH of this second mix is ajusted to pH 4.2 by addition of citric acid. Both mix are then homogenised at 100 bars using a homogeniser and then pasteurised. After maturation at 4°C, the two ice cream preparations were mix together at a 1:1 mixing ratio and aerated at -6°C to +4°C using the processing device described on Fig. 1 coupled with a shearing device (Hoyer freezer or Mondomix whipper) to obtain an overrun of 100%. The mix was then poured in molds and hardened at a temperature of -40°C.

### Example 3

A sour cream mousse is prepared from 50% milk cream (30% fat), 10% non-fat milk solids, 5% whey protein isolate, 8% sucrose, water and emulsifiers. The pH of this first recipe is ajusted to pH 4.3 by addition of citric acid. A second recipe is prepared from 50% milk cream (30% fat), 10% non-fat milk solids, 2.5% acacia gum powder, 8% sucrose, 0.4% of a stabiliser blend, water and emulsifiers. The pH of this second recipe is ajusted to pH 4.3 by addition of citric acid. Both preparations are then homogenised at 80 bars using a homogeniser and then pasteurised. The two preparations were mix together at a 1:1 mixing ratio and aerated at +4°C using the processing device described on Fig. 1 coupled with a Mondomix whipper to obtain an overrun of 100%. The aerated sour cream mousse was then poured in molds and stored at +4°C.

### Example 4

A wafer recipe is obtained by mixing using a mixer 50% of a wheat flour containing 70% of starch and 4% of a whey protein concentrate with water and adjusting the pH to 4.2 by addition of lactic acid. Another recipe is obtained by mixing using a Hobbard mixer 50% of a wheat flour containing 70% of starch and 1.6% of an acacia gum powder with water and adjusting the pH to 4.2 by addition of lactic acid. Both recipes are then mixed together at a 1:1 mixing ratio and aerated using the mixing device described on Fig. 1 coupled with Hobbard mixer equiped with a thermostated bowl. This aerated wafer base is then poured in-between baking plates at 150°C and cooked to obtain wafers.

## Claims

1. A product taken from the group consisting of a foam, foamed emulsion and a foamed dispersion, wherein the interface water-air, comprises a soluble complex formed concomitantly with the interface and instantaneously forming coacervates which form a stabilizing film at said interface by the mixture of at least a protein and at least a polysaccharide oppositely charged, said product being in a pH range within which the electrostatic interaction between both compounds oppositely charged occurs and wherein the total amount of protein and polysaccharide is comprised between 0.01 and 5 % in weight.

2. A product according to claim 1, wherein the protein is taken from the group consisting of a protein from milk, soy, egg, meat, fish and plant.

3. A product according to claim 2, wherein the protein is taken from the group consisting of beta-lactoglobulin, whey protein, soy protein, egg white protein and wheat protein..

4. A product according to any of claims 1 to 3, wherein the polysaccharide is taken from the group consisting of gums, hydrocolloids and stabilizers.

5. A product according to claim 4, wherein the polysaccharide is acacia gum, arabinogalactans, Ax rye, Ax wheat, carboxy-methyl-cellulose, chitosan, xanthan gum, beta-glucan.

6. A product according to any of claims 1 to 5, wherein the ratio protein to polysaccharide is comprised between 1:20 and 20:1.

7. The use of the product according to any of claims 1 to 6, in the ice-cream, low-fat mayonnaise, culinary, chocolate, dessert, wafers, sponge cakes, dairy and petfood area, wherein said product is used in an amount comprised between 10 and 100 % of the final product in weight.

8. The use of the product according to any of claims 1 to 6 in the cosmetic and perfume area, wherein said product is used in an amount comprised between 10 and 100 % of the final product in weight.

9. A process for the preparation of a foam product according to claim 1, wherein a solution or a bulk mass of the at least one protein and a solution or a bulk mass of the at least one polysaccharide is injected with the air in a bulk mass or directly in the air.

10. A process for the preparation of a foam product according to claim 1, wherein a solution of at least one protein and a solution of at least one polysaccharide are mixed together in the presence of air.

11. A process for the preparation of a foamed emulsion according to claim 1, wherein a bulk product is prepared, a first part of an emulsion is stabilised with at least one protein, a second part of an emulsion is stabilised with at least one polysaccharide, both emulsions are mixed together and diluted in the bulk product, then a new solution of the protein with a new solution of the polysaccharide are injected with air in the bulk product to form the foamed bulk product.

12. A process for the preparation of a foamed dispersion according to claim 1, wherein a solution of the at least one protein and a solution of the at least one polysaccharide is injected with the air in a bulk of dispersed particles.

## Patentansprüche

1. Produkt, das aus der Gruppe genommen ist, die einen Schaum, eine aufgeschäumte Emulsion und eine aufgeschäumte Dispersion aufweist, wobei die Wasser-/Luft-Grenzfläche einen löslichen Komplex aufweist, der gleichzeitig mit der Grenzfläche gebildet ist und unmittelbar Koazervate bildet, die an der Grenzfläche durch Mischung von mindestens einem Protein und mindestens einem entgegengesetzt aufgeladenen Polysaccharid einen stabilisierenden Film bilden, wobei das Produkt in einem pH-Bereich liegt, in dem die elektrostatische Wechselwirkung zwischen beiden entgegengesetzt aufgeladenen Verbindungen auftritt, und wobei die Gesamtmenge an Protein und Polysaccharid zwischen 0,01 und 5 Gewichts-% liegt.

2. Produkt nach Anspruch 1, wobei das Protein aus der Gruppe genommen ist, die ein Protein aus Milch, Soja, Ei, Fleisch, Fisch und Pflanzen aufweist.

3. Produkt nach Anspruch 2, wobei das Protein aus der Gruppe genommen ist, die Beta-Lactoglobulin, Molkenprotein, Sojaprotein, Eiklarprotein und Weizenprotein aufweist.

4. Produkt nach einem der Ansprüche 1 bis 3, wobei das Polysaccharid aus der Gruppe genommen ist, die Gummen, Hydrokolloide und Stabilisatoren aufweist.

5. Produkt nach Anspruch 4, wobei das Polysaccharid Gummi arabicum, Arabinogalactan, Ax-Roggen, Ax-Weizen, Carboxymethylcellulose, Chitosan, Xanthan, Beta-Glucan ist.

6. Produkt nach einem der Ansprüche 1 bis 5, wobei das Verhältnis Protein zu Polysaccharid zwischen 1:20 und 20:1 beträgt.

7. Verwendung des Produktes nach einem der Ansprüche 1 bis 6 in folgenden Bereichen: Eiscreme, fettarme Mayonnaise, kulinarische Produkte, Schokolade, Dessert, Waffeln, Biskuitgebäck, Milchprodukte und Haustiernahrung, wobei das Produkt in einer Menge verwendet wird, die zwischen 10 und 100 Gewichts-% des Endproduktes liegt.

8. Verwendung des Produktes nach einem der Ansprüche 1 bis 6 im kosmetischen Bereich oder im Parfümbereich, wobei das Produkt in einer Menge verwendet wird, die zwischen 10 und 100 Gewichts-% des Endproduktes liegt.

9. Verfahren zur Herstellung eines Schaumproduktes nach Anspruch 1, wobei eine Lösung oder eine Masse des mindestens einen Proteins und eine Lösung oder eine Masse des mindestens einen Polysaccharides mit Luft in eine Masse oder direkt in die Luft eingespritzt wird.

10. Verfahren zur Herstellung eines Schaumproduktes nach Anspruch 1, wobei eine Lösung des mindestens einen Proteins und eine Lösung des mindestens einen Polysaccharides in Gegenwart von Luft vermischt werden.

11. Verfahren zur Herstellung einer aufgeschäumten Emulsion nach Anspruch 1, wobei ein Massenprodukt hergestellt wird, wobei ein erster Teil einer Emulsion mit mindestens einem Protein stabilisiert wird, ein zweiter Teil einer Emulsion mit mindestens einem Polysaccharid stabilisiert wird, beide Emulsionen vermischt und in dem Massenprodukt verdünnt werden, und dann eine neue Lösung des Proteins mit einer neuen Lösung des Polysaccharides mit Luft in das Massenprodukt eingespritzt werden, um das aufgeschäumte Massenprodukt zu bilden.

12. Verfahren zur Herstellung einer aufgeschäumten Dispersion nach Anspruch 1, wobei eine Lösung des mindestens einen Proteins und eine Lösung des mindestens einen Polysaccharides mit Luft in eine Masse von dispergierten Partikeln eingespritzt wird.

## Revendications

1. Un produit pris parmi le groupe constitué d'une mousse, d'une émulsion moussée et d'une dispersion moussée, dans lequel l'interface eau-air comprend un complexe soluble formé, simultanément avec l'interface et formant de manière instantanée des coacervats qui forment un film stabilisant à ladite interface, par le mélange d'au moins une protéine et d'au moins un polysaccharide de charge opposée, ledit produit ayant une plage de pH dans laquelle l'interaction électrostatique se produit entre les deux composants de charge opposée et dans lequel la quantité totale de protéine et de polysaccharide est comprise entre 0.01 et 5% en poids.

2. Un produit selon la revendication 1, dans lequel la protéine est prise dans le groupe constitué d'une protéine de lait, de soja, d'oeuf, de viande, de poisson et de plante.

3. Un produit selon la revendication 2, dans lequel la protéine est prise dans le groupe constitué de bêta-lactoglobuline, de protéine de lactosérum, de protéine de soja, de protéine de blanc d'oeuf et de protéine de blé.

4. Un produit selon l'une des revendications de 1 à 3, dans lequel le polysaccharide est pris dans le groupe constitué de gommes, d'hydrocolloïdes et de stabilisants.

5. Un produit selon la revendication 4, dans lequel le polysaccharide est de la gomme d'acacia, des arabinogalactanes, de l'Ax de seigle, de l'Ax de blé, de la carboxy-méthyl-cellulose, du chitosane, de la gomme de xanthane, du bêta-glucane.

6. Un produit selon l'une des revendications de 1 à 5, dans lequel le rapport protéine-polysaccharide est compris entre 1 :20 et 20 :1.

7. L'utilisation du produit selon l'une des revendications de 1 à 6, dans les domaines suivants : glace, mayonnaise allégée, produits culinaires, chocolat, desserts, gaufrettes, génoises, produits laitiers et aliments pour animaux de compagnie, dans laquelle ledit produit est utilisé en une quantité comprise entre 10 et 100% du produit final en poids.

8. L'utilisation du produit selon l'une des revendications de 1 à 6 dans les domaines de la cosmétique et des parfums, dans laquelle ledit produit est utilisé en une quantité comprise entre 10 et 100% du produit final en poids.

9. Un procédé pour la préparation d'un produit moussé selon la revendication 1, dans lequel une solution ou une masse en vrac d'au moins une protéine et une solution ou une masse en vrac d'au moins un polysaccharide est injectée dans une masse en vrac avec de l'air ou directement dans l'air.

10. Un procédé pour la préparation d'un produit moussé selon la revendication 1, dans lequel une solution d'au moins une protéine et une solution d'au moins un polysaccharide sont mélangées ensemble en présence d'air.

11. Un procédé pour la préparation d'une émulsion moussée selon la revendication 1, dans lequel un produit en vrac est préparé, une première partie d'une émulsion est stabilisée avec au moins une protéine, une seconde partie d'une émulsion est stabilisée avec au moins un polysaccharide, les deux émulsions sont mélangées ensemble et diluées dans le produit en vrac, puis une nouvelle solution de la protéine avec une nouvelle solution du polysaccharide sont injectées dans le produit en vrac avec de l'air pour former le produit en vrac moussé.

12. Un procédé pour la préparation d'une dispersion moussée selon la revendication 1, dans lequel une solution d'au moins une protéine et une solution d'au moins un polysaccharide est injectée avec de l'air dans une masse de particules dispersées.
